# EUROPEAN PATENT APPLICATION

(11) **EP 4 576 436 A1**
(43) Date of publication of application: **25.06.2025**
(21) Application number: 24220115.0
(22) Date of filing: 16.12.2024
(51) Int. Cl.: H01R 4/2483, H01R 4/2406, H01R 11/09, H01R 4/36

(54) **FIXING BOLT AND METHOD FOR FIXING A STRANDED CONDUCTOR WIRE**

(30) Priority: 18.12.2023 US 202318543427
(71) Applicant: Tyco Electronics-Simel, 21220 Gevrey Chambertin (FR)
(72) Inventor: PELTIER, Bruno, 21220 Gevrey-Chambertin (FR); CARLHIAN, Gilles, 21220 Gevrey-Chambertin (FR); MILLOT, Benoit, 21220 Gevrey-Chambertin (FR); PETRIGNET, Laurent, 21220 Gevrey-Chambertin (FR)
(74) Representative: Ashton, Gareth Mark

(57) **Abstract**

A fixing bolt (103) for fixing a stranded conductor wire (401a, 401b) has a tapered section (215) extending along a central axis direction (207) of the fixing bolt (103). The tapered section (215) establishes an electrical contact with the stranded conductor wire (401a, 401b). A first portion (305) of the tapered section (215) is an arched cone frustum that is arched with respect to the central axis direction (207).

## Description

### Background to the invention

The present invention relates to a fixing bolt for the fixing of a stranded conductor wire, as well as to a connector assembly and a wire connection assembly comprising the fixing bolt. The invention also relates to a method for fixing a stranded conductor wire with a hollow connector, in particular a mechanical connector or a bolted sleeve connector or a cable lug.

It is known in the art to electrically connect electrically conductive in-wire connection assemblies in which a conductive wire is inserted in a hollow connector and fixed thereto using a screwable fixing bolt. When the conductive wire is a stranded conductor wire, the fixing bolt may be configured to penetrate into the stranded conductor wire, thus improving the mechanical and electrical contact between the wire and the connector body. Such a connector for a wire connection assembly is disclosed in EP 2 999 053 A1. Further, a fixing bolt according to the prior art is disclosed in EP 2 999 054 A1 and represented in Figure 5. The shown fixing bolt 1 has a driving head 3, a threaded section 5 and a tapered section 7 extending along a linear central axis direction 9 of the fixing bolt 1. The tapered section 7 is configured to establish an electrical contact with a stranded conductor wire and has a conical penetration portion 11.

When stranded conductor wires of different diameters are connected together in one such wire connection assembly, the fixing bolts may penetrate respective stranded conductor wires at different depths depending on the diameter of each stranded conductor wire. The uneven penetration depths lead to unevenness in the external protrusion of the fixing bolt, increasing spatial requirements and handling difficulties.

In addition, in the case of a stranded conductor wire of comparatively larger diameter, the depth of penetration of the fixing bolt is reduced, which may increase electrical contact resistance between the strands of the stranded conductor wire, as well as between the stranded conductor wire and the fixing bolt.

### Summary of the invention

A fixing bolt for fixing a stranded conductor wire has a tapered section extending along a central axis direction of the fixing bolt. The tapered section establishes an electrical contact with the stranded conductor wire. A first portion of the tapered section is an arched cone frustum that is arched with respect to the central axis direction.

### Brief introduction to the drawings

The invention will be understood and appreciated by careful study of the following detailed description of exemplary embodiments, taken in conjunction with the accompanying drawings, in which:
Figure 1 shows a perspective view of a connector assembly according to an embodiment of the invention;
Figure 2 shows a cross-sectional view of the connector assembly of Figure 1;
Figure 3 shows a side view of a fixing bolt of the connector assembly of Figure 1;
Figure 4A shows a cross-sectional view of a wire connection assembly according to a first embodiment including the connector assembly of Figure 1;
Figure 4B shows a cross-sectional view of a wire connection assembly according to a second embodiment including the connector assembly of Figure 1; and

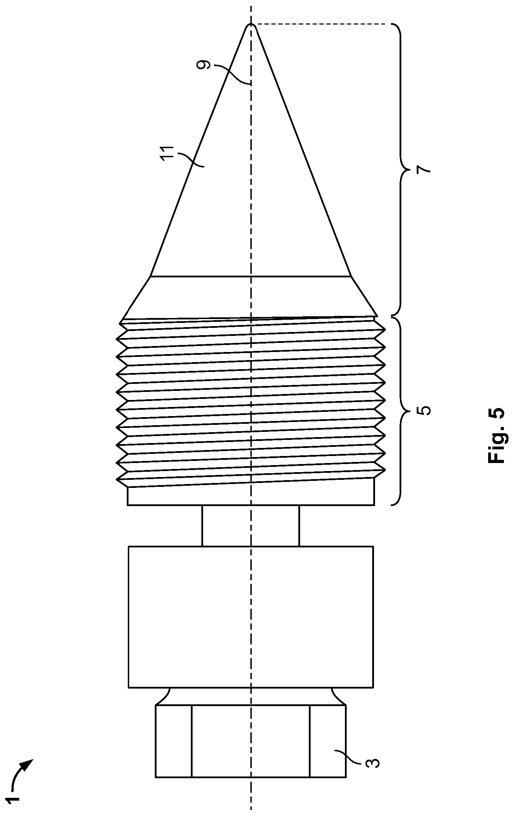

Figure 5 shows a fixing bolt according to the prior art.

### Detailed description

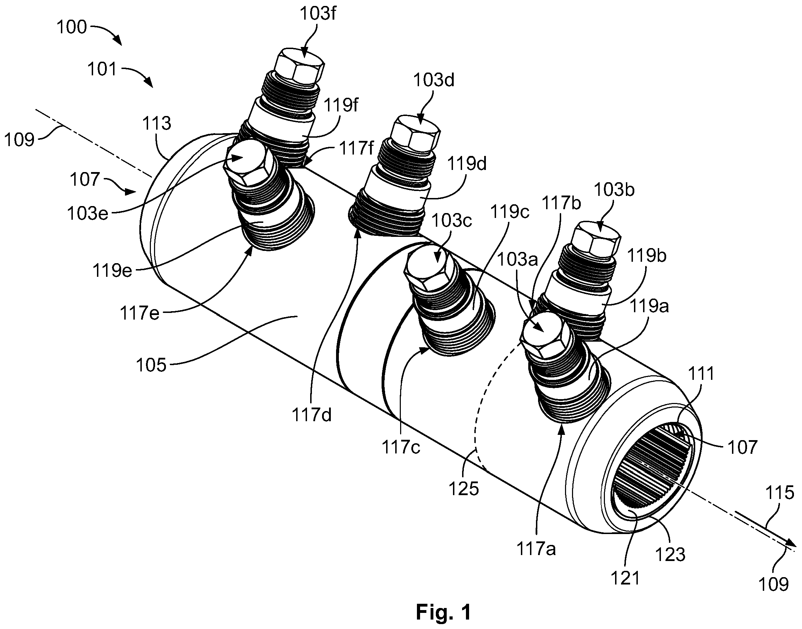

In the following detailed description of embodiments, identical reference signs used in different figures and/or in different portions of the description of the figures relate to identical elements. Further, unless explicitly mentioned otherwise, the structural features of the objects illustrated in Figures 1 to 4B are not drawn to scale.

The technical features and their associated advantages or effects described in the following description of embodiments can be combined with or adapted to any aspects or embodiments of the invention, together or independently, yielding further possible embodiments or aspects of the invention.

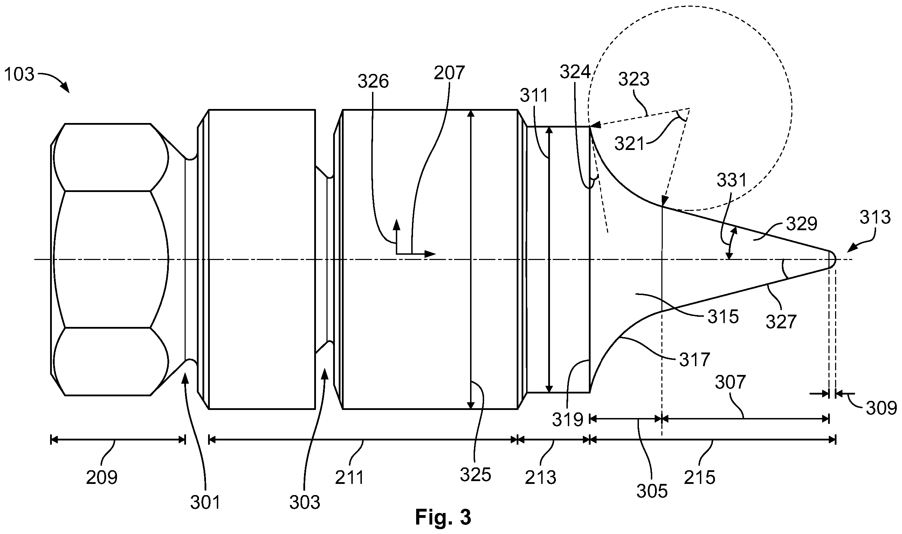

A connector assembly according to a first embodiment of the invention will now be described with reference to Figures 1 to 4B. Figure 1 shows the connector assembly 100 in a perspective view. The connector assembly 100 comprises a connector 101, as well as a plurality of fixing bolts 103; in the shown embodiment, six fixing bolts 103a, 103b, 103c, 103d, 103e, 103f. The fixing bolts 103 are shearing bolts and will be described in detail with reference to Figure 3.

In an embodiment, the connector 101 is a mechanical connector, in particular a bolted power connector for high voltage power applications. The connector 101 may be suited for voltages of 1,000 V and above, in particular up to and including 42,000 V. According to the invention, however, variants of the connector 101 could also be suited for voltages below 1,000 V or above 42,000 V.

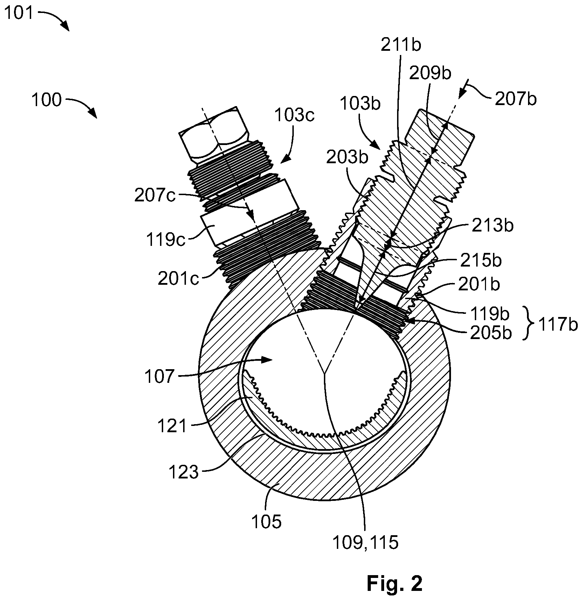

The connector 101, as shown in Figures 1 and 2, has a connector body 105 of a conductive material, for example a corrosion-resistant metal, such as an aluminum alloy. The connector body 105 has a hollow, tubular shape and defines a wire-receiving chamber 107. The tubular shape of the connector body 105 defines a connector central axis 109 of the connector 101. The connector 101 receives a first wire through a first opening 111 to the wire-receiving chamber 107, and a second wire through a second opening 113 to the wire-receiving chamber 107. The connector 101 is configured to receive the first wire in a connector central axis direction 115 coaxial with the connector central axis 109, and to receive the second wire in a direction opposite to the connector central axis direction 115.

The connector 101 comprises a plurality of bores 117, in the shown embodiment six bores 117a, 117b, 117c, 117d, 117e, 117f. The number of bores 117 may correspond to the number of fixing bolts 103. The bores 117 comprise bushings 119, in the shown embodiment six bushings 119a, 119b, 119c, 119d, 119e, 119f, and internally threaded traversing through-holes 205, one of the traversing through-holes 205b shown in Figure 2, that are machined through the tubular connector body 105 into the wire-receiving chamber 107. Thus, the bushings 119 are internally threaded and are screwed into respective through-holes 205, such that the bores 117 extend from the outside of the connector 101 through to the inner hollow volume of the wire receiving chamber 107.

The bushings 119 are configured to receive and to be screwed together with the fixing bolts 103. Figure 1 shows the connector assembly 100 in a delivery position or initial position, in which the connector assembly 100 has not been assembled with one or more wires. Thus, as shown in Figure 1, each bushing 119 holds a respective one of the fixing bolts 103. That is, each fixing bolt 103 is partially screwed into a respective one of the bushings 119.

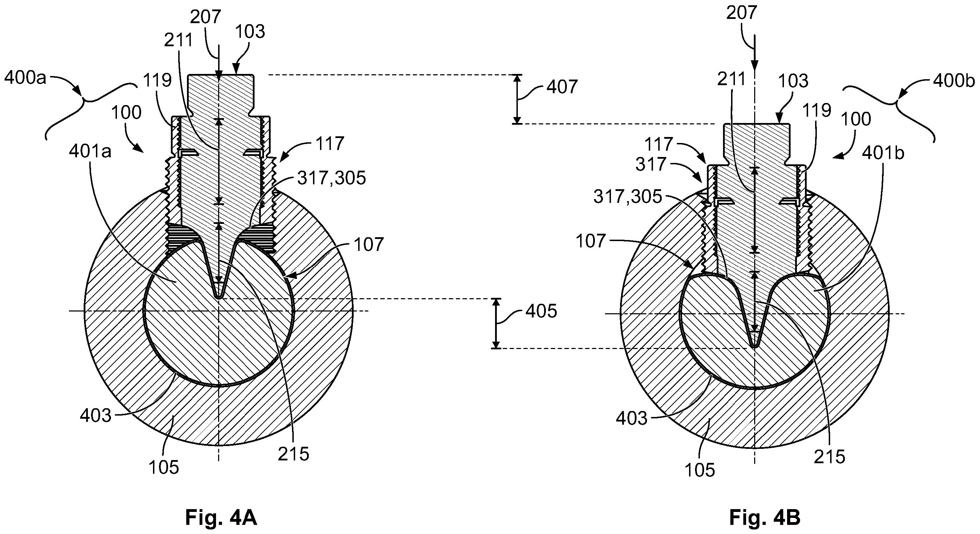

For illustration purposes, Figure 1 also shows an optional longitudinal, semi-circular insert 121 received through the first opening 111 and extending along an internal surface 123 of the connector body 105. The insert 121 adapts the connector assembly 102 to wires of smaller diameter, thus increasing the field of application of the connector assembly to a larger variety of wire diameters. To accommodate wires of larger diameter, the installer may remove the insert 121, as shown for example in Figures 4A and 4B.

Figure 2 shows a cross-sectional view of the connector assembly 100 along the cross-sectional view line 125 as shown on Figure 1. The cross-sectional view of Figure 2 cuts the connector body 105, including the insert 121 extending along the wire-receiving chamber 107, as well as the fixing bolt 103b and the bushing 119b.

As can be seen from the example of the bushing 119b in Figure 2, each bushing 119 comprises an external thread 201 and an internal thread 203. The external thread 201 fits the bushing 119 in a respective traversing through-hole 205 and the internal thread 201 fits the fixing bolt 103 in the bushing 119. As already mentioned, the bushings 119 are screwed into respective through-holes 205, such that the bores 117 extend from the outside of the connector 101 through to the inner hollow volume of the connector 101, that is, to the wire receiving chamber 107.

As shown in Figure 2, with the example of the fixing bolt 103b, each fixing bolt 103 comprises, along its respective fixing bolt central axis direction 207, a driving head 209, a threaded section 211, a middle section 213, and a tapered section 215. The exemplary fixing bolt 103b has the fixing bolt central axis direction 207b, the driving head 209b, the threaded section 211b, the middle section 213b, and the tapered section 215b.

In the delivery position of the connector assembly 100 shown in Figures 1 and 2, the threaded sections 211 of the fixing bolts 103 are only partially screwed into their respective bushings 119. In addition, the bushings 119 are only partially screwed into their respective through-holes 205. Thus, the tapered section 215 of the fixing bolt 103 does not protrude into the wire-receiving chamber 107.

The fixing bolts 103 of the connector assembly 100 will now be described more in detail with reference to Figure 3. The fixing bolt 103 represented in Figure 3 is also a fixing bolt according to a second embodiment of the invention.

The fixing bolt 103 is a fixing bolt for the fixing of a stranded conductor wire with the connector 101. As shown in Figure 3, the fixing bolt 103 extends along a linear central axis direction 207. Along the central axis direction 207, the fixing bolt 103 comprises a driving head 209, a threaded section 211, a middle section 213, and a tapered section 215. In addition, because as previously mentioned the fixing bolt 103 is a shearing bolt, the fixing bolt 103 further comprises a first shearing section 301 in between the driving head 209 and the threaded section 211, and a second shearing section 303 in the middle of the threaded section 211.

Driving head 209, threaded section 211, and shearing sections 301 and 303 or analogous to the corresponding features of the fixing bolts are known from prior art. The threaded section 211 engages with a matching internal thread of a corresponding nut, for example the internal thread 203 of the bushing 119. The driving head 209 facilitates the gripping of the fixing bolt 103 for the screwing of the fixing bolt 103, for example with the bushing 119. The shearing sections 301, 303 are configured to fail at a predetermined fastening torque. That is, when the fastening torque applied to the screwing of the fixing bolt 103 exceeds a threshold, the shearing sections 301, 303 may fail, that is, break the fixing bolt 103 apart.

The tapered section 215 establishes an electrical contact with a stranded conductor wire, in particular stranded conductor wire received through the first opening 111 or the second opening 113 in the wire-receiving chamber 107 of the connector 101.

The tapered section 215 comprises, along the central axis direction of the fixing bolt 207, a first portion 305, a second portion 307, and a tip portion 309, as shown in Figure 3. The tapered section 215 extends directly from the middle section 213, tapering down from the diameter 311 of the middle section 213 towards the distal extremity 313 facing in the central axis direction 207 of the fixing bolt 203.The first portion 305 is directly sandwiched between the middle section 213 and the second portion 307. The second portion 307 is directly sandwiched between the first portion 305 and the tip portion 309.

The first portion 305 is an arched cone frustum. That is, the first portion 305 is arched, curved, with respect to the central axis direction 207. More specifically, a mantle surface 315 of the first portion 305 is arched, curved, with respect to the central axis to section 207. Thus, in a cross-sectional plane extending along the central axis direction 207, for example, the cross-sectional plane along line 125 is illustrated in Figure 2, the outline 307 of the first portion 305 is arched, that is, non-linear. In other words, the arched cone frustum of the first portion 305 does not have the shape of a conventional cone frustum resulting from the revolution of a diagonal line segment around the central axis direction 20. Instead, the first portion 305 has the shape of a body resulting from the revolution of the curve segment around the central axis direction 207. The arched cone frustum of the first portion 305 has a circular base at the junction 319 to the middle section 213 and extends along a cone axis coaxial with the central axis direction 207. Therefore, first portion 305 is a frustum of a right circular cone and is substantially rotationally symmetric.

The arched cone frustum of the first portion 305 is convexly arched with respect to the central axis direction 207. In other words, the curve segment defining the outline 317 and the mantle 315 is convex in reference to the central axis direction 207. Specifically, in the present embodiment, the first portion 305 is circularly arched. That is, the outline 317 or the curve segment defining the outline 317, of the first portion 305, is circularly arched in a cross-sectional plane extending along the central axis direction 207. Here, the outline 317 comprises a circular arc 321 of 60° to 70° of a circle. In variants, a smaller circular arc, for example of 10° to 60°, or a greater circular arc, for example of 70° to 90°, can also be suitable. In variants, instead of being circularly arched, the outline or the mantle surface of the first portion 305 may be arched differently than circularly. For example, the outline of the mantle surface of the first portion 305 may be exponentially arched, or hyperbolically arched, or logarithmically arched.

In addition, here, the outline 317 is a circular arc of a circle having a radius 323 shown in Figure 3 of 50% to 100%, in an embodiment of 70% to 85% of the largest cross-sectional radius of the fixing bolt 103. Here, the largest cross-sectional radius of the fixing bolt 103 is the diameter 325 of the threaded section 211.

The outline 317 of the first portion 305, shaped as an arc of a circle, extends from the middle section 213 at angle 324 of 0° to 30°, in an embodiment 5° to 15°, with respect to a direction 326 orthogonal to the central axis direction 207 of the fixing bolt 103. In other words, the first portion 305 extends from the middle section 213 towards to the central axis direction 207 at an angle of 0° to 30°, in an embodiment 5° to 15°, and such that the mantle surface 315 is inwardly convexly curved with respect to the central axis direction 207.

The second portion 307 is cone frustum that is not arched. That is, the corresponding outline 327 and mantle surface 329 of the second portion 307 are linear with respect to the central axis direction 207. The cone frustum of the second portion 307 as a cone frustum of a right circular cone having a cone angle 331 smaller than 16°. In variants, a cone angle smaller than 21° or smaller than 18°, may be sufficient.

As the second portion 307 extends directly from the first portion 305, the outline 327 of the second portion 307 extends tangentially from the circularly arched outline 317 of the first portion 305. Further, at the distal extremity 313 of the fixing bolt 103, the second portion 307 is terminated by the tip portion 309. The tip portion 309 has the shape of the hemisphere.

In this embodiment, the fixing bolt 103 is used with a tubular, electrically conductive mechanical connector configured to electrically connect two electrical wires. However, the fixing bolt 103 is also adapted to be used in different types of connectors. For example, the fixing bolt 103 is adapted to be used in mechanical connector connecting only one electrical wire, such as a cable lug. The fixing bolt 103 is also adapted for use in a mechanical connector connecting a plurality, for example three of four, of the stranded conductor wires. For example, the fixing bolt 103 may be adapted to be used in a splice connector.

The advantages of the fixing bolt 103 will be further understood in view of the now following description of corresponding wire connection assemblies, described with reference to Figure 4.

Figures 4A and 4B show two embodiments of a wire connection assembly according to the invention side-by-side; Figure 4A shows a first wire connection assembly 400a and Figure 4B shows a second wire connection assembly 400b. In both embodiments, the fixing bolt 103 has been screwed in the bore 117, by engaging the threaded section 211 with the internal thread 304 of the bushing 119 of the connector 101. Thus, the tapered section 215 has entered into the wire-receiving chamber 107 and partially penetrates stranded wire 401a, 401b received therein, pushing the wire against the internal surface of the connector body 105 defining the wire-receiving chamber 107. In particular, the fixing bolt 103 pushed the wires 401a, 401b against the surface 403 of the wire-receiving chamber 107 facing in a direction opposed to the central axis direction 207 of the fixing bolt 103.

The wire connection assemblies 400a and 400b differ only in the type of stranded conductor wire used. The wire connection assembly 400a comprises the connector assembly 100 and a stranded conductor wire 401a having comparatively larger diameter, while the wire connection assembly 400b comprises the connector assembly 100 and a stranded conductor wire 401b having a comparatively smaller diameter.

In this embodiment, the stranded conductor wires are conventional stranded aluminum wires, for example Class 2 or Class 5 wires according to IEC 60228. However, the invention is also suitable for stranded conductor wires of different metals, or alternatively to strand-filled water-block wires that comprise internal insulation elements. For illustration purposes only, stranded conductor wires of diameter sizes 10 mm² to 1600 mm² could be considered for the present invention.

In Figure 4A, the fixing bolt 103 is only partially screwed into the wire-receiving chamber 107, and thus only partially penetrates the wire 401a. In Figure 4B, the stranded conductor wire 401b is smaller, and thus the fixing bolt 103 is screwed deeper into the wire-receiving chamber 107 than in Figure 4A.

In Figure 4A, as the wire 401a already fills the wire-receiving chamber 107, the fixing bolt 103 cannot be screwed far into the stranded conductor wire 401a. That is, the penetration depth of the fixing bolt 103 is limited by the clearance between stranded conductor wire 401a diameter and wire receiving chamber 107 diameter. However, in comparison to the prior art fixing bolt 1, the fixing bolt 103 can be screwed deeper into the wire 401a, as the tapered section 215 is more tapered, than for example the tapered section 7 of the prior art connector. Thus, external protrusion is reduced, improving compactness of the wire connection assembly 400a.

At the same time, the outline 317 of the first portion 305 is arched circularly, to form curved shoulders for the packing and compressing of the stranded conductor wire. Thus, when the fixing bolt 103 is screwed with a smaller stranded conductor wire 401b as shown on Figure 4B, the tapered section 215 does not penetrate the wire 401b excessively, as the penetration depth is limited by the arched cone frustum of the first portion 305.

Therefore, the difference in penetration depth 405 of the fixing bolt 103 between wire connection assembly 400a and wire connection assembly 400b is reduced in comparison to prior art. Accordingly, the difference in external protrusion 407 of the fixing bolt 103 between wire connection assembly 400a and wire connection assembly 400b is also reduced, both before the shearing off of a portion of the fixing bolt 103, as shown in Figures 4A and 4B, or after the shearing, for example along shearing section 301 or 303. Thus, even when different stranded wire dimensions are used on the same connector 101, no large difference in external protrusion of the fixing bolt must be expected, enabling improved handling of the wire connection assemblies 401a, 401b.

In addition, the shape of the outline 317 of the first portion 305 allows for the strands of the stranded wire to be more efficiently gripped, that is, packed, and compressed against the opposing surface 403 of the wire receiving chamber 107 facing in the direction opposed to the central axis direction 207. This improves the mechanical fastening strength of the wires 401a, 401b with the connector 101, and also reduces the electrical contact resistance between strands of the wire 401a, 401b and between the wires 401, 401b and the connector body 105.

Each one of the fixing bolt 103, the connector assembly 100, and the wire connection 400 provide an improved fixing solution for the fixing of a stranded conductor wire with a hollow connector. In particular, they overcome drawbacks of the state of the art, including difficulties in accommodating a variety of stranded conductor wire sizes, and insufficiencies in the compression of conductor wire strands inside the connector.

The present invention provides an improved solution for the fixing of a stranded conductor wire with a hollow connector.

This object is achieved by the fixing bolt for the fixing of the stranded conductor wire, for example with a mechanical connector or a bolted sleeve connector or a cable lug, according to the present disclosure. The fixing bolt of the invention comprises a tapered section extending along a linear central axis direction of the fixing bolt and configured to establish an electrical contact with the wire. The fixing bolt is characterized in that a first portion of the tapered section is an arched cone frustum, in particular arched with respect to the central axis direction.

In comparison to a fixing bolt tapered in the shape of a conventional cone frustum, which does not have a portion arched with respect to the central axis direction, the fixing bolt of the invention can penetrate the stranded conductor deeper and easier, while maintaining a sufficient compression force in the fastened state. Thus, the packing performance, that is, the compression of the stranded wire and the fastening of the stranded conductor wire to a connector body, as well as the electrical contact, are improved. In addition, as the fixing bolt can penetrate the stranded conductor wire deeper even in the case of large diameter wires, the external protrusion of the fixing bolt is reduced, and, in particular, is less disparate with respect to the external protrusion of a fixing bolt screwed into a small diameter stranded wire.

According to one aspect, the arched cone frustum can be a frustum of a right circular cone. Thus, the arched cone frustum can be formed in one piece with the fixing bolt, and for example seamlessly transition from a cylindrical bolt.

According to one aspect, the arched cone frustum can be convexly arched with respect to the central axis direction. When arched cone frustum is convexly arched with respect to the central axis direction, as opposed to concavely arched, a deeper and smoother penetration of the stranded conductor wire is facilitated.

According to one aspect, the arched cone frustum can be circularly arched. In particular, the arched cone frustum can be arched such that an outline of the arched cone frustum in a cross-sectional plane extending along the central axis direction is circularly arched. A circular arching of the first portion strikes an advantageous balance between smoothness of penetration of the tapered section and compression force when screwing the fixing bolt with the stranded conductor wire.

According to one aspect, an outline of the arched cone frustum in a cross-sectional plane extending along the central axis direction can be a circular arc of 10° to 90° or 30° to 90° of a circle. In particular, the outline of the arched cone frustum can be a circular arc of 60° to 70° of a circle. In this configuration, the first portion can be machined more cost-efficiently into a fixing bolt than alternative curved shapes.

According to one aspect, an outline of the arched cone frustum in a cross-sectional plane extending along the central axis direction can be a circular arc of a circle having a radius of 50% to 100% of the largest cross-sectional radius of the fixing bolt. In particular, the outline of the arched cone frustum can be a circular arc of a circle having a radius of 70% to 85% of the largest cross-sectional radius of the fixing bolt.

According to one aspect, the tapered section can be substantially rotationally symmetric. This prevents damage to the stranded conductor wire when the screwing of the fixing bolt fastens the tapered section into the stranded conductor wire.

According to one aspect, the mantle surface of the first portion can be arched with respect to the central axis direction. When the mantle surface is evenly arched, the penetration depth and compression force can be evenly distributed around the circumference of the tapered section.

According to one aspect, the tapered section further comprises a second portion, wherein the second portion is a cone frustum with a cone angle smaller than 21°. In particular, the cone angle of the second portion can be smaller than 18°, in an embodiment smaller than 16°. With these advantageously small cone angles, the fixing bolt can be penetrate the conductor wire deeper. At the same, to the arched first portion, a sufficient packing performance is maintained even in the case of a large diameter wire.

According to one aspect, the second portion can extend directly from the first portion in the central axis direction. Thus, when the fixing bolt is screwed in the stranded conductor wire, the penetration of the second portion seamlessly transitions towards the penetration of the first portion. This can facilitate the calibration of fastening torque when the fixing bolt is fastened with connector and into the stranded conductor wire.

According to one aspect, the tapered section can comprise a tip portion centered on the central axis direction. The tip portion facilitates penetration of the fixing bolt in the conductor wire by creating a first entry point in between strands of the stranded conductor wire.

According to one aspect, the tip portion can extend, in the central axis direction, directly from the second portion. Thus, when the fixing bolt is screwed in the stranded conductor wire, the penetration of the tip portion seamlessly transitions towards the penetration of the second portion. This can further facilitate accurate torque calibrating when screwing the fixing bolt into the stranded conductor wire.

According to one aspect, the tip portion can have the shape of a hemisphere. The hemispherical shape of tip avoids material damage to the strands of the aluminum wire.

According to one aspect, the arched cone frustum can be exponentially arched, or hyperbolically arched, or logarithmically arched. In particular, an outline of the arched cone frustum in a cross-sectional plane extending along the central axis direction can be respectively exponentially or hyperbolically or logarithmically arched. These alternatives to the fixing bolt having a circularly arched first portion may be more suitable to specific application that require different trade-offs between wire compression and smoothness, that is, ease, of penetration into the wire. Specifically, an arched cone frustum that is exponentially arched with respect to the central axis direction may apply greater compression force on a packed stranded conductor wire, in comparison to the circularly arched case. On the other hand, an arched cone frustum that is logarithmically arched with respect to the central axis direction may have a better shape for a smooth and deep penetration in the stranded conductor wire. An arched cone frustum that is hyperbolically arched with respect to the central axis direction may be even more suitable for smoother, deeper penetration in the stranded conductor wire.

According to one aspect, the fixing bolt can be a shearing bolt and comprises at least one, for example two or three, shearing sections configured to fail at a predetermined torque. This ensures that the fixing bolt is securely locked with the connector at the predetermined torque. The external protrusion of the fixing bolt can thus be adapted based on the positioning of the shearing sections along the extension of the fixing bolt.

According to one aspect, the fixing bolt can be configured to fix the stranded conductor wire with a mechanical connector such as a bolted sleeve connector or a splice connector. Thus, the fixing bolt can comprise an external thread to be screwed with an internally threaded bore of the mechanical connector or bolted sleeve connector.

The invention further relates to a connector assembly, comprising the fixing bolt according to one of the above aspects and a hollow connector, wherein the fixing bolt comprises a threaded section, and the hollow connector comprises an internally threaded bore extending from the outside of the connector through to the inner hollow volume of the hollow connector, wherein the fixing bolt is screwed with the bore. This connector assembly can benefit from the above-outlined advantages of the fixing bolt of the invention.

In one aspect, the connector assembly can comprise a plurality of the fixing bolts and the hollow connector comprising a respective plurality of the internally threaded bores, wherein each one of the plurality of the fixing bolts is screwed with a respective one of the plurality of the internally threaded bores. With a plurality of fixing bolts and corresponding bores, a plurality of stranded conductor wires having differing diameters can be accommodated. Due to the arched cone frustum, the depth of penetration is less disparate, leading to improved handling and spatial arrangement when the connector assembly is assembled with the wire.

In one aspect of the connector assembly, the hollow connector can have a tubular shape. This allows for the stranded conductor wire to be pressed particularly tightly inside the hollow connector.

In one aspect of the connector assembly, the hollow connector can be a mechanical connector or a bolted sleeve connector. Therefore, the hollow connector is suited to accommodate a plurality of fixing bolts to fix a stranded conductor wire.

The invention also relates to a wire connection assembly, comprising the connector assembly according to one of the above aspects, and at least one stranded conductor wire, wherein the fixing bolt is screwed with the bore such that the tapered section penetrates the stranded conductor wire at least partially. This wire connection assembly can benefit from the above-outlined advantages of the connector assembly of the invention.

In one aspect of the wire connection assembly, the fixing bolt can be screwed with the bore such that the arched cone frustum at least partially penetrates the stranded conductor wire, thereby pushing the stranded conductor wire against a surface of the wire-receiving chamber facing in a direction opposed to the central axis direction.

In this wire connection assembly, the above-described fixing bolt can penetrate deeper into the stranded conductor wire, and no loss in the compression force is observed thanks to the first portion being arched with respect to the central axis direction.

This connector assembly can benefit from the above-outlined advantages of the fixing bolt. Specifically, the fixing bolt can penetrate deeper into the stranded conductor wire, without loss in compression performance of the stranded conductor wire inside the hollow connector. Therefore, electrical, and mechanical contact between wire and connector, as well as between strands of the wire, are improved. In addition, the external protrusion of the fixing bolts is more even, that is, less disparate with respect to diameter sizes of the stranded conductor wires.

### Reference Signs

1 fixing bolt according to prior art
3 driving head of the fixing bolt according to prior art
5 threaded section of the fixing bolt according to prior art
7 tapered section of the fixing bolt according to prior art
9 central axis direction of the fixing bolt according to prior art
11 conical portion of the fixing bolt according to prior art
100 connector assembly
101 connector
103, 103a, 103b, 103c, 103d, 103e, 103f fixing bolt
105 connector body
107 wire-receiving chamber
109 central axis of the connector
111 first opening
113 second opening
115 central axis direction of the connector
117, 117a, 117b, 117c, 117d, 117e, 117f bore
119, 119a, 119b, 119c, 119d, 119e, 119f bushing
121 longitudinal insert
123 internal surface of the connector body
125 cross-sectional view line
201, 201b external thread of the bushing
203, 203b internal thread of the bushing
205, 205b traversing through-hole in the connector body
207, 207b ,207c central axis direction of the fixing bolt
209, 209b driving head
211, 211b threaded section
213, 213b middle section
215, 215b tapered section
301 first shearing section
303 second shearing section
305 first portion of the tapered section
307 second portion of the tapered section
309 tip portion of the tapered section
311 diameter of the middle section
313 distal extremity of the fixing bolt
315 mantle surface of the first portion
317 outline of the first portion
319 junction between middle section and first portion
321 angular value of the circular arc
323 radius of the circular arc
324 angle of tangent to the circular arc
325 diameter of the threaded section
326 direction orthogonal to the central axis direction
327 outline of the second portion
329 mantle surface of the second portion
331 cone angle of the second portion
400a, 400b wire connection assembly
401a, 401b stranded conductor wire
403 surface of the wire receiving chamber opposed to the central axis direction of the fixing bolt
405 difference in penetration depth
407 difference in external protrusion

## Claims

1. A fixing bolt (103) for fixing a stranded conductor wire (401a, 401b), comprising:
a tapered section (215) extending along a central axis direction (207) of the fixing bolt (103), the tapered section (215) establishing an electrical contact with the stranded conductor wire (401a, 401b), a first portion (305) of the tapered section (215) is an arched cone frustum that is arched with respect to the central axis direction (207).

2. The fixing bolt (103) according to claim 1, wherein the arched cone frustum is a frustum of a right circular cone and/or is convexly arched with respect to the central axis direction (207).

3. The fixing bolt (103) according to claim 1 or 2, wherein an outline (317) of the arched cone frustum in a cross-sectional plane extending along the central axis direction (207) is circularly arched.

4. The fixing bolt (103) according to claim 3, wherein the outline (317) of the arched cone frustum in the cross-sectional plane extending along the central axis direction (207) is a circular arc (321) of 30° to 90° of a circle and/or has a radius (323) of 50% to 100% of a largest cross-sectional radius of the fixing bolt (103).

5. The fixing bolt (103) according to claim 1 or 2, wherein an outline (317) of the arched cone frustum in a cross-sectional plane extending along the central axis direction (207) is exponentially, hyperbolically or logarithmically arched.

6. The fixing bolt (103) according to any preceding claim, wherein the tapered section (215) is rotationally symmetric.

7. The fixing bolt (103) according to any preceding claim, wherein a mantle surface (315) of the first portion (305) is arched with respect to the central axis direction (207).

8. The fixing bolt (103) according to any preceding claim, wherein the tapered section (215) has a second portion (307) that is a cone frustum with a cone angle (331) smaller than 21°.

9. The fixing bolt (103) according to claim 8, wherein the second portion (307) extends directly from the first portion (305) in the central axis direction (207).

10. The fixing bolt (103) according to any preceding claim, wherein the tapered section (215) has a tip portion (309) centered on the central axis direction (207).

11. The fixing bolt (103) according to claim 10, wherein the tip portion (309) extends directly from the second portion (307) in the central axis direction (207).

12. The fixing bolt (103) according to claim 10 or 11, wherein the tip portion (215) has a shape of a hemisphere.

13. A connector assembly (100), comprising:
the fixing bolt (103) of any preceding claim; and
a hollow connector (101) having an internally threaded bore (117, 119) extending from an outside of the hollow connector (101) through to an inner hollow volume (107) of the hollow connector (101), the fixing bolt (103) has a threaded section (211) and is screwed with the internally threaded bore (117, 119).

14. A wire connection assembly (400a, 400b), comprising:
a stranded conductor wire (401a, 401b); and
the connector assembly (100) of claim 13,
wherein the tapered section (215) of the fixing bolt (103) at least partially penetrates the stranded conductor wire (401a, 401b) and establishes an electrical contact with the stranded conductor wire (401a, 401b).

15. The wire connection assembly (400a, 400b) according to claim 14, wherein the arched cone frustum at least partially penetrates the stranded conductor wire (401a, 401b) and pushes the stranded conductor wire (401a, 401b) against a surface of the inner hollow volume (107) of the hollow connector (101) facing in a direction opposite the central axis direction (207).
